# EUROPÄISCHE PATENTSCHRIFT

(11) **EP 4 652 121 B1**
(45) Veröffentlichungstag und Bekanntmachung des Hinweises auf die Patenterteilung: **22.07.2026**
(21) Anmeldenummer: 24725143.2
(22) Anmeldetag: 07.05.2024
(51) Int. Cl.: B65G 1/04, B65G 1/06, B65G 1/137

(54) **FAHRERLOSES TRANSPORTSYSTEM MIT PASSIVER TRANSFERSTATION ZUM AUSTAUSCH UND STATISCHEN BEREITSTELLUNG VON TRANSPORTGÜTERN**
DRIVERLESS TRANSPORT SYSTEM HAVING A PASSIVE TRANSFER STATION FOR THE EXCHANGE AND STATIC PROVISION OF TRANSPORT ITEMS
SYSTÈME DE TRANSPORT SANS CONDUCTEUR COMPORTANT UNE STATION DE TRANSFERT PASSIVE POUR L'ÉCHANGE ET LA FOURNITURE STATIQUE D'ARTICLES DE TRANSPORT

(30) Priorität: 17.05.2023 DE 102023113092
(43) Veröffentlichungstag der Anmeldung: 26.11.2025
(73) Patentinhaber: SSI Schäfer Automation GmbH (DE), 97232 Giebelstadt (DE)
(72) Erfinder: KLEEDOERFER, Ralf, 97828 Marktheidenfeld (DE); HUCK, Vitali, 27578 Bremerhaven (DE)
(74) Vertreter: Witte, Weller & Partner Patentanwälte mbB
(86) Internationale Anmeldenummer: PCT/EP2024/062618
(87) Internationale Veröffentlichungsnummer: WO 2024/235762

(56) Entgegenhaltungen:
- WO-A1-2022/038579
- US-A1- 2013 166 108
- US-A1- 2022 297 936

## Beschreibung

Die vorliegende Offenbarung betrifft allgemein ein Intralogistik-System zur Handhabung von Transportgütern und insbesondere zur statischen Bereitstellung von zumindest einem der Transportgüter, wie z.B. (genormten) Lagerbehältern, mit: einem fahrerlosen Transportfahrzeug (FTF); einer (passiv betriebenen) Transferstation zur statischen Bereitstellung von mindestens einem der Transportgüter auf einer (planaren) Abstellfläche der Transferstation (in der Produktionslogistik); und einer Steuerung.

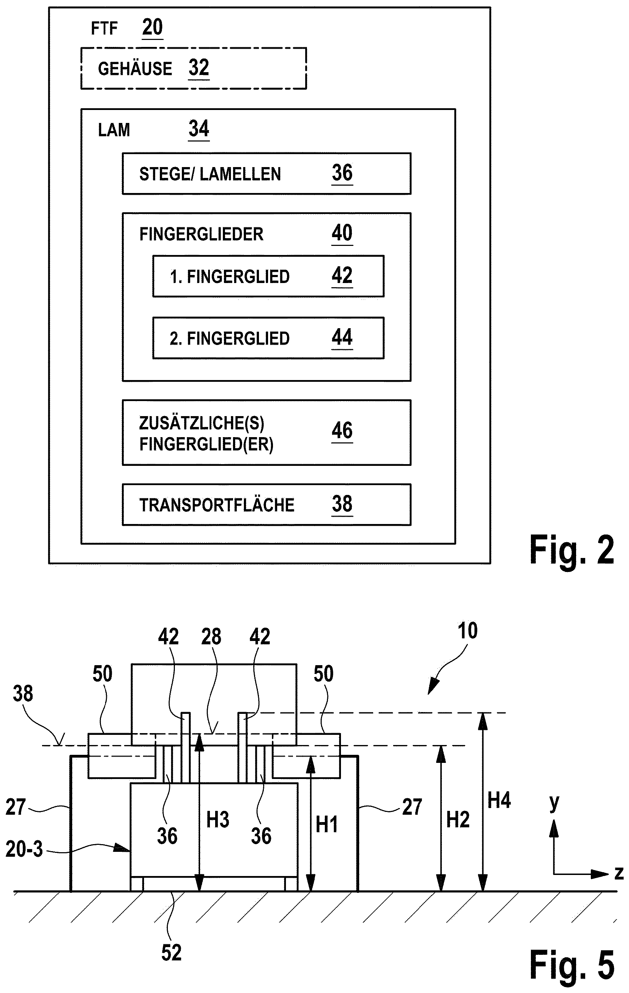

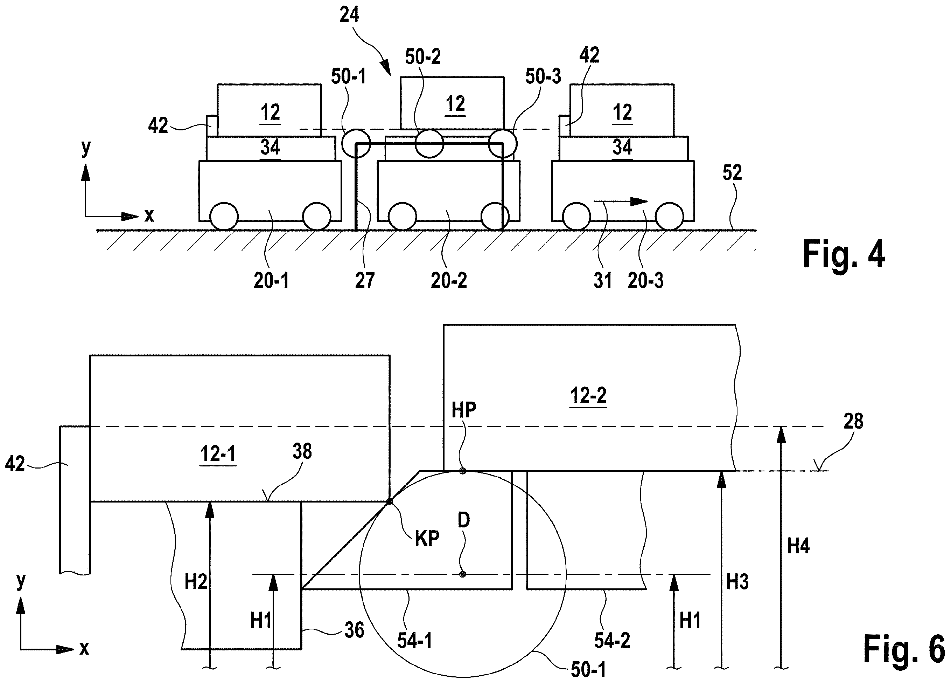

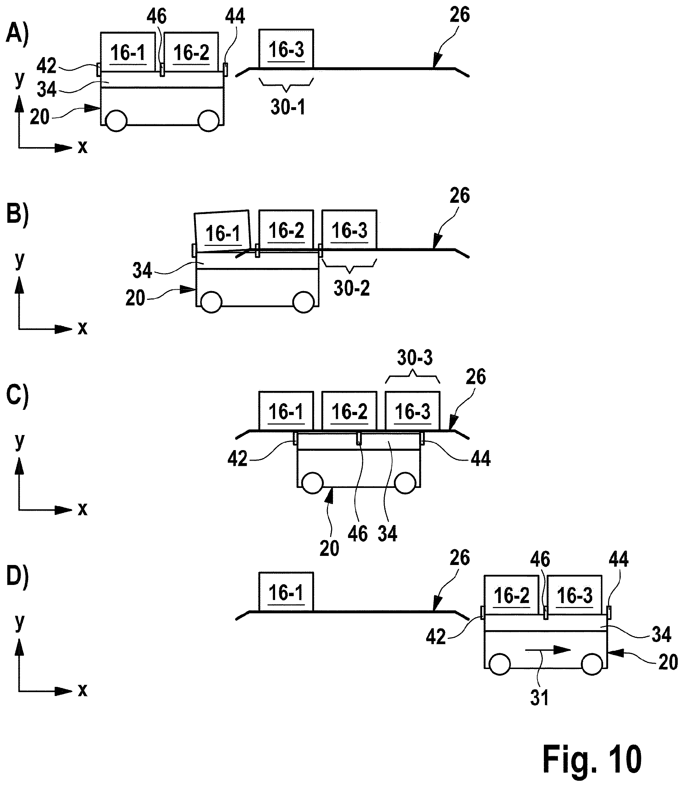

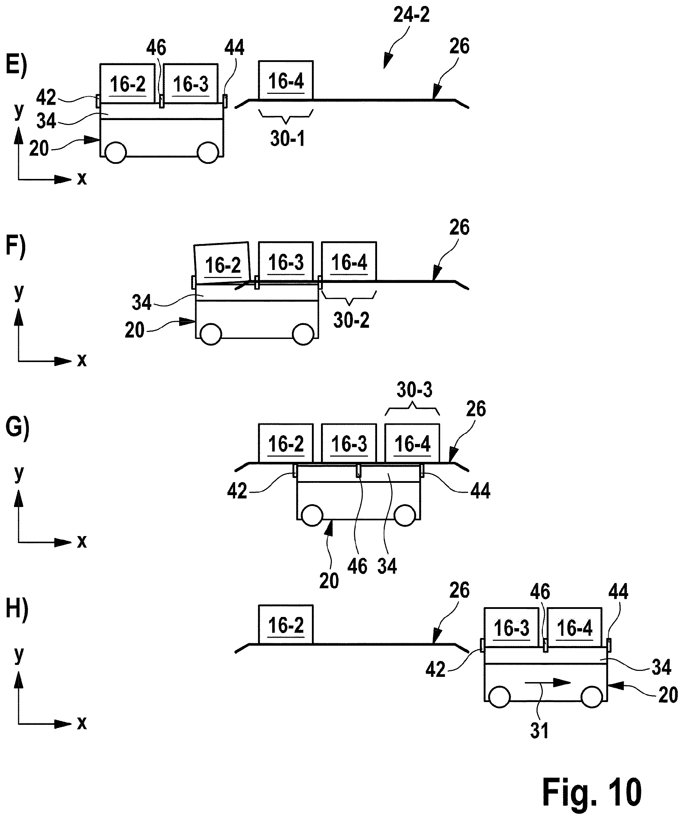

Die DE 20 2018 101 313 U1 (SSI Schäfer) zeigt verschiedene Belade- und Entladestationen, die mit FTF betrieben werden, die auf ihrer Oberseite jeweils ein Lastaufnahmemittel aufweisen, das aus parallel zur Fahrtrichtung angeordneten, länglichen Stegen oder (Stütz-)Lamellen gebildet wird, die horizontal senkrecht zur Fahrtrichtung zueinander beabstandet sind und die mit ihren Oberseiten gemeinsam eine planare (d.h. flache, ebene, gerade und nicht gewölbte) Transportebene bzw. Transportfläche definieren, auf der Transportgüter während eines Transports ruhen bzw. sitzen. Die Stege sind kamm- bzw. lamellenartig ausgebildet, um die Transportgüter kämmend aufzunehmen und/oder abzugeben. Die Aufnahme und Abgabe erfolgt bevorzugt passiv, insbesondere trägheitsbasiert, indem das FTF, insbesondere kämmend, durch starr angeordnete Aufnahme- bzw. Abgabeglieder einer Beladestation (Aufnahme) bzw. einer Entladestation (Abgabe) hindurch fährt, wobei die Glieder der Stationen entsprechend kammartig abgeordnet sind, so dass die Glieder und die Stege während einer Durchfahrt nicht miteinander kollidieren. Die Stege weisen zum Zweck der Aufnahme bzw. Abgabe an ihren in der Fahrtrichtung stromaufwärtigen oder stromabwärtigen Enden Finger auf, die als Mitnehmer (vgl. dort Fig. 5 und 6), Schieber (vgl. dort Fig. 14) oder Anschläge (vgl. dort Fig. 10) dienen. Die Finger ragen vertikal senkrecht aus der Transportebene heraus und sind unbeweglich an den entsprechenden Enden der Stege fixiert.

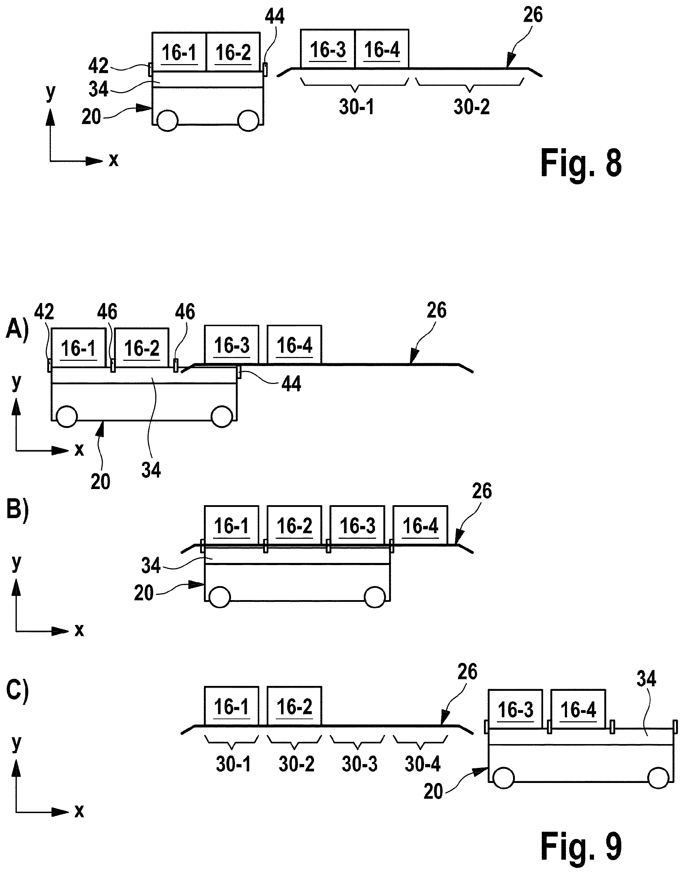

Die DE 10 2014 111 396 A1 (SSI Schäfer) zeigt unterschiedlich hohe Typen von FTF, deren lastaufnahmemittelbildenden, lamellen- bzw. kammartigen Stege an ihren stromabwärtigen und/oder stromaufwärtigen Enden aus der Transportfläche vertikal vorstehende starre Finger aufweisen. Die Finger können auch beweglich ausgebildet sein, indem sie in einer Höhenrichtung ein- und ausfahrbar sind. Ferner werden eine Entladestation und eine Beladestation (vgl. dort Fig. 9) mit sogenannten "Spaghetti-Förderern" (vgl. dort Fig. 8A) eingesetzt. Die Spaghetti-Förderer weisen senkrecht zur Fahrtrichtung beabstandete, angetriebene Einzelförderer auf, die parallel zur Fahrtrichtung ausgerichtet sind, um mit den Stegen der FTF während einer Durchfahrt der FTF zu kämmen. Die Stege bzw. Lamellen können alternativ auch bürstenartig durch Borsten (vgl. dort Fig. 8B) gebildet werden, die elastisch verformbar sind, so dass sie vom Spaghetti-Förderer während der Durchfahrt des FTF durch die Stationen niedergedrückt werden, und die so hart sind, dass die Güter während des Transports in einem Mindestabstand zur Oberseite des Fahrzeugs gehalten werden.

Da der Spaghetti-Förderer aktiv angetrieben ist, ist es schwierig, die einzelnen Förderer schmal zu konstruieren. Der Antrieb benötigt Platz. Die frei kragende Aufhängung ist erschwert, weil der Antrieb vorhanden ist. Der Spaghetti-Förderer muss durch externe Sensoren überwacht werden, um eine Transportgut-Abgabe und -Aufnahme mit den FTF zu synchronisieren. Der Steuerungsaufwand während eines Transportgutaustauschs ist erheblich, wenn man den Spaghetti-Förderer nicht permanent betreibt, was energetisch ungünstig wäre.

Generell fahren die FTF bei einem kämmenden Austausch der Transportgüter zwischen den FTF und einem Transferförderer durch den Transferförderer hindurch (Durchfahrt) und somit unter eine sich längs anschließende Hauptfördertechnik. Diese FTF müssen auch wieder unter der Hauptfördertechnik hervortreten. Dafür wird bei Planung der FTF-Fahrstrecken Platz benötigt, der nicht anders genutzt werden kann. Die Planungsfreiheit eines Layouters ist dadurch eingeschränkt, was unerwünscht ist. Außerdem muss die Hauptfördertechnik höher als üblich positioniert werden, was eine Nachrüstung von Bestandsanlagen erschweren kann. Die FTF könnten auch niedriger ausgeführt sein. Es wäre in diesem Fall aber für das Unterfahren der Hauptfördertechnik eine aufwendigere Stützkonstruktion erforderlich.

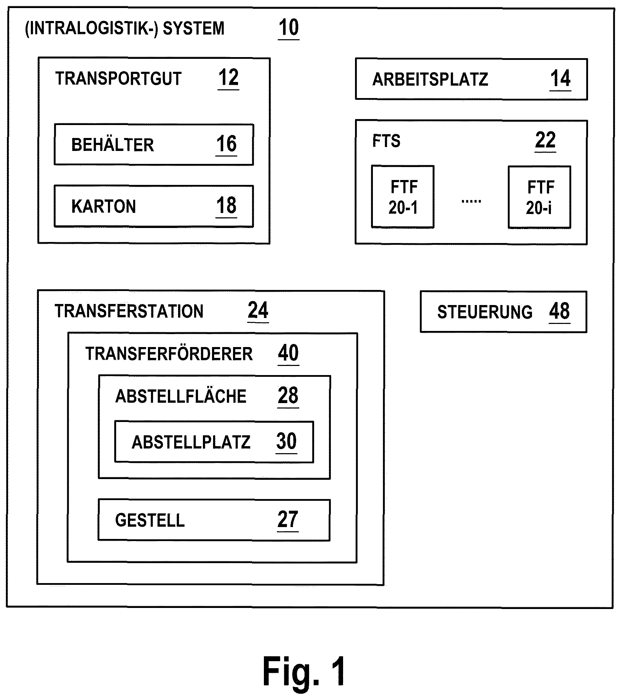

Die US 4,508,484 B (Inventio AG) zeigt eine Be- und Entladestation, die von einem FTF kämmend durchfahren wird (vgl. dort Fig. 1-4). Die Station weist ein Gestell (nicht dargestellt) mit einem integrierten Kettenförderer auf, dessen Förderketten seitlich zum durchfahrenden FTF angeordnet sind und der durch Zahnstangen angetrieben wird, die auf einer Oberseite eines Gehäuses des FTF unterhalb von Stegen angeordnet sind. Die Zahnstangen kommen während der Durchfahrt, d.h. bei einer Abgabe von links nach rechts, mit einem Antriebsritzel des Kettenförderers in Eingriff, das über eine Kupplung (nicht dargestellt) und einen Übertrieb (nicht dargestellt) an die beiden seitlichen Förderketten K koppelbar ist. Der Kettenförderer weist eingangsseitig einen ansteigenden (Rampen-)Abschnitt auf, der in einen (Horizontal-)Abschnitt übergeht, wo das Transportgut vom FTF getrennt ist. Danach kann das Transportgut vom Kettenförderer an einen stromabwärts angeordneten angetriebenen Stetigförderer übergeben werden, indem der Kettenförderer über einen Motor (nicht dargestellt) angetrieben wird.

Obwohl bei dieser Lösung oben auf externe Sensoren verzichtet wird, die eine Synchronisierung der Bewegungen des FTF und des Transferförderers beim Transportgutaustausch bewirken, ist der übertragende Antrieb nachteilig. Die FTF und der Transferförderer kommen für den Übertrieb mechanisch in Kontakt, was eine exakte Ausrichtung erfordert und in einem erhöhten Verschleiß resultiert. Kleinere Höhendifferenzen zwischen den Zahnstangen auf den FTF und den Antriebsritzeln des Transferförderers können in einer mechanischen Blockade resultieren, wenn die Zahnstangen zu hoch positioniert sind, oder zu einem Ausfall des Antriebs des Transferförderers führen, wenn die Zahnstangen zu tief positioniert sind. Die links und rechts auf den FTF angeordneten Zahnstangen müssen in der Längsrichtung der FTF exakt zueinander positioniert sein, um die linken und rechten Förderketten des Transferförderers synchron zu betreiben. Der mechanische Übertrieb stellt also hohe Anforderungen an die Positionierungsgenauigkeit, die im praktischen Alltag schwer zu erfüllen sind.

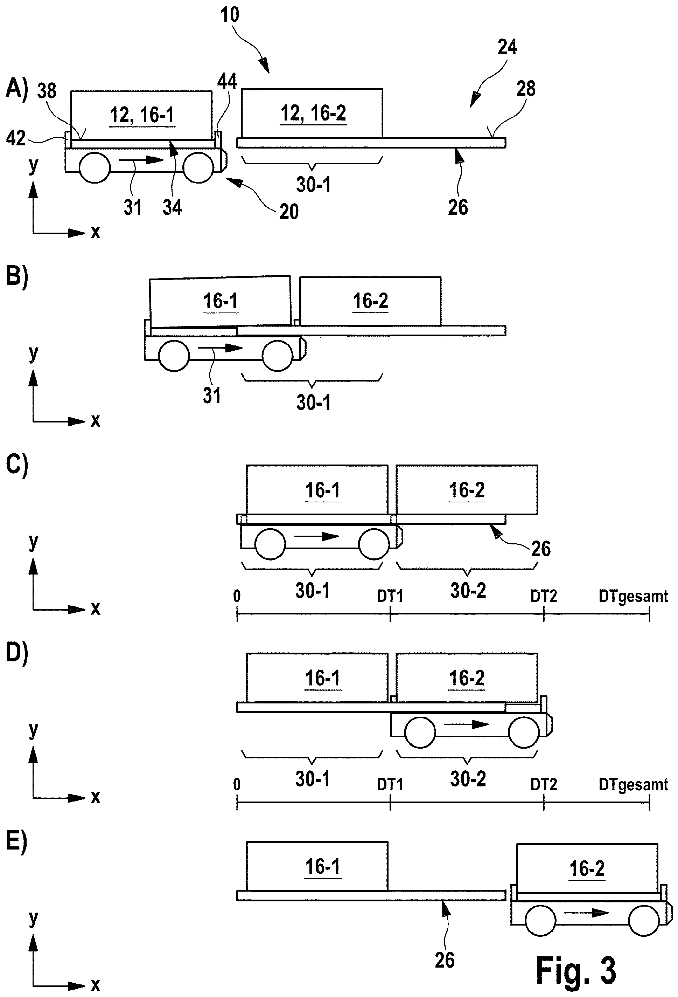

Die JP 1986 050 853 B2 (SHINKO ELECTRIC CO LTD) offenbart in ihren Fig. 1-4 eine Transferstation, die auf einer Seite an ein FTS und auf der anderen Seite an einen angetriebenen Rollenförderer koppelt. Eine oberseitig vorgesehene Transportplattform (Lastaufnahmemittel) des FTF ist mit zwei vertikal versenkbaren Schubschildern ausgestattet, die individuell aktivierbar sind. Die Transportplattform interagiert kämmend mit der Transferstation, die einen rampenförmigen Eingangs/Ausgangs-Abschnitt und einen horizontalen Pufferabschnitt aufweist und die zweispurig aus frei drehenden Rollen aufgebaut ist. Der horizontale Abschnitt koppelt an den angetriebenen Rollenförderer. Bei einer Abgabe des Transportguts an den Rollenförderer schiebt das hintere Schubschild das auf der Plattform ruhende Transportgut zuerst auf den ansteigenden Abschnitt und anschließend auf den Horizontalabschnitt, während das FTF in die Transferstation hineinfährt, wodurch die Trennung des Transportguts von der Plattform erfolgt. Anschließend fährt das FTF (mit angehobenen oder abgesenkten) Schubschild rückwärts wieder aus der Transferstation aus, so dass die Abgabe beendet ist (vgl. dort Fig 4). Bei einer Aufnahme wird das Transportguts vom Rollenförderer auf den nicht angetriebenen Horizontalabschnitt der Transferstation gefördert, so dass das FTF das dort bereitstehende Transportgut (mit abgesenkten Schubschildern) unterfahren kann, indem das FTF mit abgesenkten Schilden in die Station einfährt. Dann wird das (beim Einfahren) vordere Schubschild ausgefahren, um das Transportgut vom Horizontalabschnitt abzuziehen, während das FTF rückwärts wieder aus der Transferstation ausfährt. Währenddessen wird das Transportgut vom Horizontalabschnitt in den geneigten Abschnitt und von dort auf die FTF-Plattform gezogen (vgl. dort Fig. 3). Bei dieser Lösung ist die aus zwei Abschnitten bestehende Transferstation in der Fahrtrichtung sehr lang, so dass viel Platz verloren geht. Bei einem Transfer eines Transportguts (Abgabe oder Aufnahme) muss das FTF vor und zurückfahren und kann während dessen entweder eine Abgabe oder eine Aufnahme durchführen. Das FTF kann während des gleichen Fahrzyklus nicht aufnehmen und abgeben. Dies verringert den Durchsatz (Anzahl von Transfers/Zeiteinheit).

Die US 11 148 890 B2 betrifft gemäß ihrem Titel mobile Träger zur Verwendung in Systemen sowie ein Verfahren zur Verarbeitung von Objekten, einschließlich mobiler Matrixträgersysteme.

Die DE 10 2015 114 370 A1 betrifft gemäß ihrem Titel ein fahrerloses Transportsystem in einer Lager- und Kommissionieranlage.

Die US 2022/297936 A1, die nach Auffassung des europäischen Patentamts den nächstliegenden Stand der Technik zeigt, betrifft gemäß ihrer Zusammenfassung ein Verfahren zum Bereitstellen einer Übertragung zwischen einem ferngesteuerten Träger und einer Behälterstützstruktur, wobei das Verfahren umfasst: Bereitstellen eines ferngesteuerten Trägers mit einer Vielzahl von Stützrippen in der Nähe der Stützstruktur und Bereitstellen von Sensorausgangsinformationen bezüglich der Ausrichtung des ferngesteuerten Trägers und der Behälterstützstruktur, wobei die Behälterstützstruktur eine Vielzahl von Stützstrukturvorsprüngen umfasst; und ein Hindurchführen der mehreren Stützrippen des ferngesteuerten Trägers zwischen den mehreren Vorsprüngen der Stützstruktur in Reaktion auf die Sensorausgangsinformationen.

Die Absätze [0115] und [0116] der US 2022/297936 A1 beschreiben die Fig. 41A und 44 der US 2022/297936 A1 wie folgt:
"[0115] *Bezugnehmend auf Fig. 41A-41B umfasst jedes der Lagerregale 240 Wahrnehmungseinheiten 241 sowie Überkopf-Wahrnehmungssysteme 243. Die Regale sind aus Vorsprüngen 224 gebildet, wie oben unter Bezugnahme auf Fig. 1-4B erläutert, und Nutzlast-Stützrippen an automatisierten Trägern 230 sind* so *beabstandet, dass sie zwischen die Vorsprünge 224 passen, wie oben erläutert. In den Systemen der Fig. 40 werden jedoch die Objekte selbst (z. B. Kisten, Taschen usw.) von den Trägern transportiert, und die Objekte können an beliebigen Stellen auf den aus Vorsprüngen gebildeten Regalen (z. B. an Stellen, deren Oberflächenabmessungen kleiner sind als die Nutzlast auf dem Träger) abgelegt und von diesen entnommen werden. Wie nachstehend näher erläutert, zeigt Fig. 42B ein Objekt 206, das neben einem anderen Objekt entlang einer Regalbreite platziert wird, das sich bereits auf den Regalvorsprüngen befindet. Fig. 41A und 41B zeigen ein Objekt 408 (in Form einer Tasche), das neben einem anderen Objekt (ebenfalls eine Tasche) entlang einer Regaltiefe platziert wird, das sich bereits auf den Regalvorsprüngen befindet. Die Träger 230 können auch über ein System von Markierungen 245 bewegt werden, die eng beieinander angeordnet sind, um ein hochauflösendes Raster zu bilden. Dadurch können sich die Träger 230 nicht nur in Richtungen bewegen, die ausschließlich mit dem Rastermuster (z. B. X- oder Y-Richtung) ausgerichtet sind, sondern auch in Richtungen, die X- und Y-Komponenten enthalten. Dadurch können sich die Träger 230 auch in nicht linearen Richtungen auf dem hochauflösenden Raster bewegen. Fig. 44 zeigt, dass jeder Träger 230 auch mehrere Wahrnehmungseinheiten* 227 *an seiner Unterseite aufweisen kann, um Markierungen* 245 *auf dem Rastermuster zu erkennen, wodurch die Bewegung in Winkel- und nicht linearen Richtungen ermöglicht wird.*
*[0116] Fig. 43 zeigt einen automatisierten Träger 230, der eine Basis* 232 *mit Rädern 234 und Lenkrollen* 235, *einen Mittelteil* 236 *und eine Nutzlast* 238 *umfasst. Die Nutzlast 236 umfasst einen ersten Satz Stützrippen 237 in einer ersten Höhe, die höher ist als eine zweite Höhe eines zweiten Satzes Stützrippen* 239. *Die zweite Höhe des zweiten Satzes von Stegen* 239 *ist höher als eine dritte Höhe eines dritten Satzes von Stützstegen 233. Das Profil der Nutzlast* 236 *ist daher gewölbt (in der Mitte höher), wobei die äußeren Stützstege 229 zum Halten von Gegenständen darauf vorgesehen sind und optional auch Wahrnehmungseinheiten 231, wie oben beschrieben, umfassen können. Fig. 44 zeigt wieder eine Unterseite des automatisierten Trägers* 239 *mit einer Vielzahl von Verfolgungswahrnehmungseinheiten* 227 *dargestellt. Die Nutzlast* 238 *ist auf einem Positionssteuerungssystem (z. B.* 39) *montiert, wie oben unter Bezugnahme auf Fig. 17-24B offenbart, wobei eine Drehung der Nutzlast* 238 *in Bezug auf die Basis* 232 *sowie eine inkrementelle Höhensteuerung der Nutzlast* 238 *in Bezug auf die Basis* 232 *bereitgestellt werden."*

Grundsätzlich besteht in der Intralogistik, insbesondere in der Produktionslogistik, das Bedürfnis, Transportgüter mit einem hohen Durchsatz bereitzustellen und abzuholen. Zum Beispiel müssen Maschinen, die Halbzeuge (Vormaterialien, vorgefertigte Rohwerkstoffe, halbfertige Werkstücke, Rohlinge, Halbfabrikate, Vorprodukten, Zwischenprodukten, etc.) oder Endprodukte automatisiert bearbeiten und/oder erzeugen, stetig mit leeren (hinsichtlich einer Abmessung standardisierten) Transportbehältern oder Kartons versorgt werden, in welche die Produkte gegeben und zu anderen Logistikpunkten (nächste Bearbeitungsstation, Lager, Versand, Warenausgang, etc.) transportiert werden. Auch müssen derartige Maschinen mit Material versorgt werden, das ebenfalls in Transportbehältern oder Kartons bereitgestellt wird. Die Transportbehälter verweilen für eine gewisse Zeitdauer (an vorab genau definierten Orten) bei den Maschinen, d.h. sie werden statisch bereitgestellt. Der Transport selbst erfolgt dabei bevorzugt durch Nutzung eines fahrerlosen Transportsystems (FTS) mit einem oder mehreren fahrerlosen Transportfahrzeugen (FTF). Die Transportbehälterwechselzeit sollte so kurz wie möglich sein. Während der Wechselzeit wird die Maschine entweder nicht mit Material versorgt oder kann keine Produkte aus- und abgeben.

Es ist daher eine Aufgabe der vorliegenden Offenbarung, ein Intralogistiksystem und ein Verfahren zum statischen Bereitstellen von mindestens einem Transportgut bereitzustellen, die die oben genannten Nachteile zumindest teilweise überwinden.

Diese Aufgabe wird gelöst durch ein Intralogistik-System gemäß Anspruch 1.

Die Transferstation baut in der Fahrtrichtung des FTF kurz. Ein rampenförmiger Eingangsabschnitt wird nicht benötigt. Die Transferstation kann vollständig vom FTF durchfahren werden, auch wenn sich die Fingerglieder in ihren erhöhten Positionen befinden, was die Abgabe und Aufnahme jeweils eines Transportguts während ein und derselben Durchfahrt des FTF ermöglicht.

Das FTF muss nicht vor und zurück fahren, um ein Transportgut abzugeben oder aufzunehmen. Die (Fahr-)Steuerung erleichtert sich dadurch.

Der Durchsatz wird erhöht, weil für einen Austausch weniger Zeit benötigt wird.

Das Intralogistik-System eignet sich besonders zum Einsatz in der Produktionslogistik, wo die Transportgüter statisch bereitzustellen sind.

Vorzugsweise ragt jedes der Fingerglieder in der jeweiligen erhöhten Stellung (vertikal) über die Abstellfläche und die Transportfläche hinaus und ist in der jeweiligen abgesenkten Stellung unterhalb der Abstellfläche positioniert.

Dies ermöglicht es, mit den Fingergliedern Transportgüter, die sich auf dem FTF befinden, auf die Transferstation aufzuschieben und Transportgüter, die sich auf der Transferstation befinden, abzuziehen. Außerdem können Transportgüter auf der Transferstation auch unterfahren werden, ohne sie zu schieben oder zu ziehen.

Vorzugsweise sind die Abstellplätze in der Fahrtrichtung des FTF zueinander beabstandet.

Diese Maßnahme ermöglicht es, dass die Fingerglieder zwischen die Transportgüter, die sich auf der Transferstation befinden, bewegbar sind, ohne diese Transportgüter unerwünscht umzupositionieren. Aufzunehmende Transportgüter können so ausgewählt werden.

Insbesondere fährt das FTF richtungswechselfrei durch die gesamte Transferstation.

Auf diese Weise kann ein erstes der Transportgüter an die Transferstation abgegeben und während der gleichen Durchfahrt ein zweites der Transportgüter von der Transferstation aufgenommen werden. Der Durchsatz wird erhöht, während die Fahrzeugsteuerung einfach bleibt.

Vorzugsweise ist jedes der Transportgüter hinsichtlich seiner Breite, und insbesondere auch hinsichtlich seiner Länge, genormt.

Diese Maßnahme erlaubt den kämmenden Austausch zwischen dem FTF und der Transferstation.

Vorzugsweise befindet sich zumindest das erste Fingerglied bei einer Einfahrt in die Transferstation in seiner erhöhten Stellung, während der Durchfahrt in Abhängigkeit von einer ersten Durchfahrtstiefe in seiner abgesenkten Stellung und wird dann in Abhängigkeit von einer zweiten Durchfahrtstiefe wieder in die erhöhte Stellung geschaltet, wobei die erste Durchfahrtstiefe kleiner als die zweite Durchfahrtstiefe ist.

Diese Maßnahme ermöglicht die Abgabe eines ersten Transportguts und die Aufnahme eines weiteren Transportguts während der gleichen Durchfahrt mit nur einem einzigen FTF, was den Durchsatz erhöht. Die Zeit, in der der erste Abstellplatz unbesetzt ist, d.h. in welcher dort kein Transportgut bereitsteht, ist praktisch null, was mit zwei separaten FTF für die Aufnahme und Abgabe nicht zu erreichen ist.

Insbesondere ist die Abstellfläche durch höchstgelegene Punkte des mehrspurigen Transferförderers definiert. Die Abstellfläche ist höher als die Tragfläche angeordnet.

Auch diese Maßnahmen unterstützen den kämmenden Austausch zwischen dem LAM und der Transferstation.

Vorzugsweise weist das System einen Sensor zur Bestimmung einer aktuellen Position des FTF, insbesondere während der Durchfahrt durch die Transferstation, auf, wobei: die Steuerung elektronisch ist; die Steuerung mit dem Sensor kommuniziert; die Steuerung eingerichtet ist; eine Durchfahrtstiefe des FTF zu bestimmen; und die Steuerung eingerichtet ist, basierend auf der Durchfahrtstiefe Signale zu erzeugen, die die Fingerglieder veranlassen, in ihre erhöhte Stellung und in ihre abgesenkte Stellung bewegt zu werden. Die Aufgabe wird ferner gelöst durch ein Verfahren gemäß Anspruch 9.

Das Verfahren ermöglicht die oben bereits beschriebenen Vorteile.

Weitere Merkmale und Vorteile der Erfindung ergeben sich aus der nachfolgenden Beschreibung bevorzugter Ausführungsbeispiele unter Bezugnahme auf die Zeichnungen. Es zeigen:
- Fig. 1: ein Blockdiagramm eines intralogistischen Systems;
- Fig. 2: ein Blockdiagramm eines FTF;
- Fig. 3: einen Ablauf eines Austauschs eines Transportguts zwischen einem FTF und einer Transferstation;
- Fig. 4: eine Seitenansicht einer Transferstation;
- Fig. 5: eine Rückansicht der Transferstation der Fig. 5;
- Fig. 6: eine Detailansicht der Fig. 4;
- Fig. 7: ein Flussdiagramm eines Verfahrens zum statischen Bereitstellen mindestens eines Tramsportguts;
- Fig. 8: eine Seitenansicht einer weiteren Transferstation zum Bereitstellen mehrerer Transportgüter;
- Fig. 9: einen Ablauf eines Austausches mehrerer separierter Transportgüter zwischen einem FTF und einer Transferstation;
- Fig. 10: einen Ablauf eines Austausches von jeweils einem Transportgut auf zwei Transferstationen mit zwei, auf einem FTF separiert beförderten Transportgütern; und
- Fig. 11: einen Ablauf eines Austausches beabstandeter Transportgüter auf einer Transferstation mit einem FTF, welches mehrere separierte Transportgüter befördert.

Die Erfindung kommt z.B. in einem intralogistischen System 10 der Fig. 1 zum Einsatz. Das System 10 kann ein Lager- und Kommissioniersystem (nicht dargestellt, wie z.B. eine Distributionsanlage), ein Produktionssystem oder Ähnliches sein, wo Transportgüter 12 zwischen einem Lager (nicht dargestellt) und einem Arbeitsplatz 14 (nicht dargestellt, wie z.B. Kommissionierplatz, Maschinenarbeitsplatz, Packplatz, etc.) oder zwischen dem Arbeitsplatz 14 und dem Lager oder einem Versand transportiert werden (Materialfluss). Das System 10 kann auch in der Produktion eingesetzt werden, wo ein oder mehrere Arbeitsplätze 14 mit Material zu beliefern sind und wo leere Transportbehälter 16, Abfall und/oder fertige (Zwischen-)Produkte abzuholen und danach ggf. auch wieder einzulagern sind. Wie in der (Intra-)Logistik üblich, werden nachfolgend eine Längsrichtung mit "X", eine Querrichtung mit "Z" und eine Höhenrichtung mit "Y" bezeichnet. Die Richtungen X, Y und Z definieren vorzugsweise ein kartesisches Koordinatensystem.

Unter einem (Transport-)"Gut" wird nachfolgend z.B. eine Transporteinheit verstanden, die innerhalb des intralogistischen Systems 10 von einem Startpunkt (Quelle) zu einem Zielpunkt (Senke) zu transportieren ist. Das Gut, das auch als Transportgut 12 bezeichnet wird, kann ein (Lager-) Ladehilfsmittel, wie einen Transportbehälter 16, sowie ggf. darin gelagerte Produkte (nicht dargestellt) umfassen. Das Gut 12 kann auch ein Karton 18 (mit oder ohne Produkte darin) sein.

Als (Lager-)Ladehilfsmittel können z.B. Paletten, Gitterboxen, Container, Behälter, Kartons, Tablare, (Hängeförder-) Taschen und Ähnliches eingesetzt werden. Ein "Produkt" kann ein einzelnes Stückgut, oder eine zusammenhängende Gruppe von vorkonfektionierten (mitunter auch unterschiedlichen) Stückgütern sein, die dann auch als Verpackungseinheit (VPE) oder Gebinde bezeichnet wird. Produkte sind durch einen Produkttyp unterscheidbare (kleinste) Einheiten eines Produktsortiments. Stückgüter sind individualisierte, unterscheidbare Produkte, die einzeln gehandhabt werden können.

Die Transportgüter 12 können hinsichtlich ihrer Abmessungen, insbesondere hinsichtlich ihrer Grundfläche, genormt bzw. vereinheitlicht sein. Bei den Behältern 16 kann es sich z.B. um Euronorm-Behälter handeln, deren Abmessungen nach EN-Vorgaben (z.B. VDA-Norm 4500) normiert sind, die z.B. festlegen, wie diese beschaffen sein müssen, damit sie für spezifische Funktionen (z.B. Stapeln, Nesten, etc.) geeignet sind. Maße (z.B. Grundfläche von: 300 x 200 mm, 400 x 300 mm, 600 x 400 mm, 800 x 600 mm, etc. und Höhe von: 70, 120, 170, 180, 220, 270, 320, 420 mm, usw.) und eine Konstruktion der Behälter 16 können eindeutig (und einheitlich) festlegt sein. Die Maße der Grundfläche richten sich insbesondere nach der Grundfläche einer Europalette (1200 x 800 mm), so dass mehrere Transportgüter eine Lage der Europalette bilden. Jedoch könnten die Behälter 16 aus unterschiedlichen Materialien hergestellt werden. Insbesondere werden Kunststoffbehälter eingesetzt, die zur Lagerung in automatisierten Lägern (z.B. AKL) geeignet sind.

Ein oder mehrere fahrerlose Transportfahrzeuge (FTF) 20 sind Teil eines fahrerlosen Transportsystems (FTS) 22. Die nachfolgenden Erläuterungen gelten für jedes der FTF 20, das im FTS 22 eingesetzt wird.

Das FTF 20 ist ein automatisiertes, vorzugsweise zwangsgeführtes, Fahrzeug, das Transportaufgaben in dem System 10 schnell, billig und skalierbar durchführt. Das FTF 20 kann vollkommen autonom betrieben werden, indem es seinen Weg durch das System 10 selbstständig bestimmt und ohne Zwangsführung (und Leitsteuerung) findet. Insbesondere kann es sich bei dem FTF 20 um ein "WEASEL" (eingetragene Marke der Firma SSI Schäfer) handeln. Das FTF 20 weist ein kämmendes Lastaufnahmemittel, LAM, auf, das unten noch näher erläutert wird.

Das FTF 20 ist ein Unstetigförderer und bewegt sich vorzugsweise entlang einem vordefinierten Transportnetzwerk (nicht dargestellt), welches z.B. durch Linien ausgebildet sein kann, die auf einen Boden eines Gebäudes geklebt oder gemalt sein können und die Wegpunkte des Netzwerks miteinander verbinden. Alternativ können auch diskrete (Gitter-)Punkte als Wegpunkte zur Navigation benutzt werden, die über virtuelle Linien miteinander verbunden sein können. Entlang dieses Transportnetzwerks können z.B. RFID-Marker als Implementierung von Wegunkten vorgesehen werden. Eine Linie zwischen zwei benachbarten Wegpunkten wird nachfolgend als (Förder- oder Transport-) Strecke bezeichnet. Es versteht sich, dass die Strecken in Form von virtuellen Verbindungslinien realisiert sein können, z.B. wenn ein internes GPS- oder Laser-Navigationssystem eingesetzt wird. Analoges gilt für die Wegpunkte.

Das System 10 umfasst neben dem mindestens einen FTF 20 eine oder mehrere Transferstationen 24.

Jede der Transferstationen 24 weist, vorzugsweise ausschließlich, einen (einzigen) mehrspurigen Transferförderer 26 auf, der eine Abstellfläche 28 definiert. Jede der Transferstationen 24 weist ein Gestell 27 auf, das auch Teil des Transferförderer 26 sein kann. Der Transferförderer 26 weist mindestens zwei (äußere) Spuren auf. Der Transferförderer 26 ist vorzugsweise nicht angetrieben. Der Transferförderer 26 kann parallel zu einem Boden 52 (vgl. Fig. 4) ausgerichtet sein, auf dem das System 10 errichtet ist, wobei der Transferförderer 26 vorzugsweise horizontal ausgerichtet ist.

Jede der Transferstationen 24 wird vorzugsweise passiv betrieben, d.h. die Stationen weisen keinen eigenen Antrieb zum Bewegen der Transportgüter 12 auf, und ist zur statischen Bereitstellung von mindestens einem der Transportgüter 16 auf der (insbesondere planaren) Abstellfläche 26 eingerichtet. Dies bedeutet insbesondere, dass mehrere der Transportgüter 12, bei einer Durchfahrt des FTF 20 durch die Transferstation 24 hindurch, entlang einer Fahrtrichtung 31 (vgl. Fig. 3) hintereinander auf einer entsprechenden Anzahl von Abstellplätzen 30 statisch bereitgestellt werden können. Der Begriff "statisch bereitgestellt" bedeutet, dass die Transportgüter 12 für eine gewisse Zeit unbewegt an einem vorab fest definierten Ort verweilen, ohne bewegt zu werden.

Jede der Transferstationen 24 ist eingerichtet, hintereinander mindestens zwei der Transportgüter 12 auf einer entsprechenden Vielzahl von Abstellplätzen 30, die ein Bestandteil der Abstellfläche 28 sind, zu puffern. Die Transportgüter 12 können in der Fahrtrichtung 32 beabstandet zueinander gepuffert werden, um einen Eingriff von Fingergliedern des FTF-LAM zu ermöglichen, wie es unten noch erläutert werden wird.

Es versteht sich, dass das System 10 weitere, nicht dargestellte Komponenten umfassen kann, die unten noch näher erläutert werden.

Fig. 2 stellt ein Blockdiagramm des FTF 20 dar. Die nachfolgenden Erläuterungen gelten für jedes der FTF 20 im System 10 der Fig. 1.

Das FTF 20 kann ein Gehäuse 32 aufweisen. Das FTF 20 weist ein Lastaufnahmemittel, LAM, 34 auf. Das LAM 34 ist auf einer Oberseite des FTF 20 vorgesehen, um die Transportgüter 12 darauf ruhend bzw. sitzend zu tragen und zu transportieren.

Das LAM 34 kann z.B. aus mehreren Stegen bzw. Lamellen 36 gebildet werden, wie eingangs beschrieben. Die Stege 36 sind parallel zur Längsrichtung des FTF 16, und somit parallel zur Fahrtrichtung des FTF 20, ausgerichtet und in der Querrichtung Z zueinander beabstandet. Die Stege 36 ragen nach oben, entlang der Y-Richtung, und definieren Freiräume zwischen sich, in welche der Transferförderer 26 (nicht dargestellt) der Transferstationen 24 kämmend eintauchen kann, während das FTF 20 parallel zur X-Richtung in die Transferstation 24 einfährt oder ausfährt oder die (gesamte) Transferstation 24 durchfährt. Die Oberseiten der Stege 36 definieren gemeinsam eine planare Transportfläche 38, auf der das oder die Transportgüter 12 während einer Fahrt mit dem FTF 20 ruhen.

Das LAM 34 weist ferner (schaltbare) Fingerglieder 40 auf, von denen jedes zwischen einer erhöhten Stellung und einer abgesenkten Stellung umschaltbar ist. Zwei der Fingerglieder 40 sind vorzugsweise in (in der Längsrichtung bzw. Fahrtrichtung 31 des FTF 20 lokalisierten) Endabschnitten der Stege 32 vorgesehen. In der Fig. 2 sind z.B. ein erstes (in der Fahrtrichtung des FTF 20 stromaufwärtiges, hinteres) Fingerglied 42 und ein zweites (in der Fahrtrichtung des FTF 20 stromabwärtiges, vorderes) Fingerglied 44 gezeigt. Es können weitere Fingerglieder 46 vorgesehen sein, die in vorbestimmten Abständen zwischen den (in der Längsrichtung äußeren) ersten und zweiten Fingergliedern 42 und 44 vorgesehen werden können. Die Fingerglieder 40 können in der Längsrichtung des FTF 20 so zueinander beabstandet sein, dass ein (oder mehrere standardisierte) Transportgüter 12 mit einem Spiel dazwischen anordenbar sind. Das Spiel, d.h. die Längendifferenz zwischen jedem lichten Abstand der Finger, die einen Transport(längen)bereich definieren können, und der vorgesehenen Transportgutlänge, kann mindestens so groß sein, dass unter Berücksichtigung der Fahrpositioniergenauigkeit des FTF und der Längentoleranz der Transportgüter, der nachfolgend beschriebene Austauschvorgang betriebssicher erfolgen kann, ohne dass die Fingerglieder 40, die von einer abgesenkten in eine erhöhte Stellung geschaltet werden, unbeabsichtigt mit den Transportgütern 12 kollidieren.

Fig. 3 veranschaulicht schematisch das System 10 der Fig. 1 während eines Austauschs von exemplarisch einem Transportgut 12 zwischen dem FTF 20 und der Transferstation 24. Das Transportgut 12 ist exemplarisch als Behälter 16 implementiert. Andere Typen von Transportgütern 12 könnten ebenfalls eingesetzt werden. Es versteht sich, dass auch mehr als ein Behälter 16 (gleichzeitig) ausgetauscht werden könnte.

Unter einem Austausch wird allgemein eine Abgabe von zumindest einem der Transportgüter 12 vom FTF 20 an die Transferstation 24 oder eine Aufnahme von mindestens einem der Transportgüter 12 durch das FTF 20 von der Transferstation 24 verstanden. Im Speziellen umfasst ein Austausch sowohl die Abgabe als auch die Aufnahme - also die Abgabe und die Aufnahme - von mindestens einem Transportgut 12, insbesondere während einer Durchfahrt des FTF 20 durch die (gesamte) Transferstation 24 hindurch.

Die Fig. 3 zeigt eine zeitliche Abfolge eines Austauschs (Abgabe und Aufnahme) von exemplarisch einen Behälter 16 zwischen dem FTF 20 und der Transferstation 24 in Form von exemplarisch fünf Momentaufnahmen (Fig. 3A-3E). In Fig. 3 umfasst der Austausch die Abgabe eines ersten Behälters 16-1 und die Aufnahme eines zweiten Behälters 16-2, während das FTF 20 (linear) in der Fahrtrichtung 31 (hier parallel zur Längsrichtung X des Systems 10) durch die gesamte Transferstation 24 hindurchfährt. Es versteht sich, dass der Behälter 16 auch nur abgegeben oder nur aufgenommen werden könnte.

Der erste Behälter 16-1 kann leer sein und der zweite Behälter 16-2 kann gefüllt sein, wenn die (stationäre) Transferstation 24 in unmittelbarer Nähe z.B. einer (nicht dargestellten) Produktionsmaschine positioniert ist, die (erzeugte oder bearbeitete) Produkte in den statisch bereitgestellten Behälter 16-2 abgibt. Sobald dieser Behälter 16-2 mit einer vorbestimmten Anzahl von Produkten gefüllt ist oder voll ist, muss er so schnell wie möglich ausgetauscht und durch den leeren Behälter 16-1 ersetzt werden, um einen Stillstand der Maschine zu vermeiden.

Alternativ könnte die Transferstation 24 z.B. im Bereich eines Kommissionierplatzes (nicht dargestellt) positioniert sein, wo ein Mensch oder ein Roboter gemäß Kommissionieraufträgen hinsichtlich eines Typs und einer Anzahl vorgegebene Produkte (aus hier nicht veranschaulichten Lagerbehältern) in den (Auftrags-)Behälter 16-2 abgibt, der dann gegen den neuen (Auftrags-)Behälter 16-1 ausgetauscht wird, sobald der Behälter 16-2 voll ist oder der Auftrag abgearbeitet ist.

Es versteht sich, dass alternativ auch der erste Behälter 16-1 voll und der zweite Behälter 16-2 dann leer sein könnte, wobei die Produkte am Ort der Transferstation 24 aus den Behältern 16 entnommen anstatt abgegeben werden, was übrigens unabhängig von der Anwendung (Produktion, Kommissionierung, etc.) gilt.

Das FTF 20 fährt während des Austauschs insbesondere nicht vor und zurück bzw. in die Station 24 ein und aus, so dass das FTF 20 richtungswechsellos durch die Station 24 hindurchfährt.

Die Fig. 3A zeigt eine Ausgangssituation eines (einfachen) Behälteraustauschs. Der erste (leere) Behälters 16-1 ruht auf dem LAM 34 des FTF 20 und ist vom FTF 20 an die Transferstation 24 abzugeben. Der zweite (volle) Behälter 16-2 steht auf einem ersten Abstellplatz 30-1, wo die Produkte in den zweiten Behälter 16-2 gegeben werden. Das FTF 20 fährt in der Fahrtrichtung 21 (linear) entlang der Längsrichtung X zur Transferstation 24, von der in der Fig. 3 nur der Transferförderer 26 veranschaulicht ist. Die Fingerglieder 40, hier die ersten und zweiten Fingerglieder 42 und 44, befinden sich in der Fig. 3A beide in ihrer jeweils erhöhten Stellung, in welcher die Fingerglieder 40 (vertikal) über die Transportfläche 38 und die Abstellfläche 28 hinausragen. In der abgesenkten Stellung (nicht gezeigt in Fig. 3A) sind in Fingerglieder 40 unterhalb der Transportfläche 38 positioniert.

Es versteht sich, dass es ausreichen würde, wenn nur das hintere, erste Fingerglied 42 in seiner erhöhten Stellung wäre, um ein Abrutschen des Behälters 16-1 während der Fahrt zu verhindern.

Außerdem versteht es sich, dass generell mehrere erste und/oder zweite Fingerglieder in der Querrichtung Z, d.h. senkrecht zur Zeichnungsebene der Fig. 3 über die Breite des LAM 34 verteilt angeordnet sein könnten. Vorzugsweise sind jeweils genauso viele Fingerglieder 40 über eine LAM-Breite verteilt, wie Stege 36 vorgesehen sind. Es können auch weniger Fingerglieder 40 über die LAM-Breite vorgesehen werden.

Besonders bevorzugt ist es, zwei Fingerglieder 40 in oder an den äußersten Stegen 36 des LAM 34 vorzusehen, was ein Verdrehen des Transportguts 12 während des Austauschs verhindern kann.

In der Figur 3B ist das FTF 20 (überlappend) in die Transferstation 24 eingefahren. Das vordere zweite Fingerglied 44 befindet sich in seiner erhöhten Stellung und schiebt deshalb den zweiten Behälter 16-2 vom ersten Abstellplatz 30-1 ab. Gleichzeitig schiebt das hintere, erste Fingerglied 42 den ersten Behälter 16 - 1 auf den ersten Abstellplatz 30-1. Diese Bewegungen werden so lange fortgesetzt, bis der erste Behälter 16-1 vollständig auf den ersten Abstellplatz 30-1 aufgeschoben ist, wie es in Figur 3C gezeigt ist.

In der Figur 3C steht der erste Behälter 16-1 auf dem ersten Abstellplatz 30-1 und der zweite Behälter 16-2 steht auf dem zweiten Abstellplatz 30-2. Die Abstellplätze 30-1 und 30-2 sind mindestens um eine Dicke (in der X-Richtung) des zweiten Fingerglieds 44 entlang der Fahrtrichtung 31 beanstandet. Das FTF 20 befindet sich in der Figur 3C in der Position einer Durchfahrtstiefe DT1. Die Durchfahrtstiefe DT1 ist dadurch definiert, dass das FTF 20 so weit in die Transferstation 24 eingefahren ist, dass der erste Behälter 16-1 auf dem ersten Abstellplatz 30-1 steht. Wenn das FTF 20 die Durchfahrtstiefe DT1 erreicht hat, hält das FTF 20 vorzugsweise kurzzeitig an, um das erste Fingerglied 42 und das zweite Fingerglied 44 in ihre jeweiligen abgesenkten Stellungen zu bewegen, wie es in der Figur 3C ebenfalls gezeigt ist.

Anschließend wird das FTF 20 mit abgesenkten Fingerglieder 42 und 44 weiter in der Fahrtrichtung 31 verfahren, bis es die Durchfahrtstiefe DT2 erreicht hat, wie in Figur 3D gezeigt. Die Durchfahrtstiefe DT2 ist dadurch definiert, dass das erste Fingerglied 42 in einen Zwischenraum zwischen den Behältern 16 bewegbar ist, ohne den ersten Behälter 16-1 umzupositionieren. Dies bedeutet, dass der erste Behälter 16-1 auf dem ersten Abstellplatz 30-1 bleibt, wenn das erste Fingerglied 42 wieder in seine erhöhte Stellung bewegt wird. Zu diesem Zweck kann das FTF 20 vorzugsweise kurzzeitig anhalten. Zu diesem Zeitpunkt können die ersten und zweiten Fingerglieder 42 und 44 wieder in ihre jeweilige erhöhte Stellung bewegt werden. Es ist nicht zwingend erforderlich, dass auch das zweite Fingerglied 44 in seine erhöhte Stellung bewegt wird.

Dann fährt das FTF 20 weiterhin in der Fahrtrichtung 31 durch die Transferstation 24 hindurch, bis die Transferstation 24 vollständig durchfahren ist. Dabei zieht das erste Fingerglied 42 den zweiten Behälter 16-2 vom zweiten Abstellplatz 30-2 auf das (tiefer liegende) LAM 34. Das FTF 20 nimmt den zweiten Behälter 16-2 auf. Diese Situation ist in der Figur 3E gezeigt. Das FTF 20 hat die maximale Durchfahrttiefe DT_{gesamt} erreicht, sobald der zweite Behälter 16-2 vollständig auf dem FTF 20 steht. In der Figur 3E ist das FTF 20 sogar bereits leicht über die maximale Durchfahrtstiefe DT_{gesamt} hinaus gefahren. In diesem Zustand ist der zweite Behälter 16-2 vollständig vom FTF 20 aufgenommen worden. Dies bedeutet, dass der zweite Behälter 16-2 ausschließlich auf dem FTF 20 steht. Der zweite Abstellplatz 30-2 ist in diesem Fall leer bzw. unbesetzt. Der zweite Behälter 16-2 kann somit gegen den ersten Behälter 16-1 ausgetauscht werden, indem das FTF 20 (kämmend) richtungswechselfrei, d.h. ohne hin und her zu fahren, die gesamte Transferstation 24 durchfährt (Durchfahrt).

Die Durchfahrtstiefe DT gibt an, wie weit das FTF 20 die Transferstation 24 bereits durchfahren hat. Die Durchfahrtstiefe DT kann z.B. in Bezug auf den Ort des vordersten (hier zweiten) Fingerglieds 40 gemessen werden. Während der Durchfahrt überlappen sich das LAM 34 und der Transferförderer 26 zumindest teilweise.

Aus der Figur 3D ist ersichtlich, dass der zweite Behälter 16-2 leicht über den Transferförderer 26 hinausragt, wenn er sich auf dem zweiten Abstellplatz 30-2 befindet. Es versteht sich, dass der Transferförderer 26 auch länger ausgebildet werden könnte, sodass der zweite Behälter 16-2 z.B. vollständig, d.h. über seine gesamte Länge (in der X-Richtung), vom Transferförderer 26 von unten gestützt wird. Dies hängt unter anderem von der (zu erwartenden) Masseverteilung innerhalb des zweiten Behälter 16-2 ab.

Obwohl in der Figur 3 gezeigt ist, dass der zweite Behälter 16-2 gegen den ersten Behälter 16-1 ausgetauscht wird, ist es ebenso möglich, entweder nur den ersten Behälter 16-1 an die (in diesem Fall vollständig leere) Transferstation 24 abzugeben oder nur den zweiten Behälter 16-2 von der Transferstation 24 aufzunehmen, wobei das FTF 20 im letzteren Fall leer in die Transferstation 24 einfährt.

Grundsätzlich ist es auch möglich, mehrere Behälter 16 (gleichzeitig) während der Durchfahrt des FTF 20 durch die Transferstation 24 auszutauschen. Um zum Beispiel zwei Behälter 16 gleichzeitig auszutauschen, müssten das FTF 20 sowie die Transferstation 24 (in der X-Richtung) entsprechend lang ausgebildet sein. Das FTF 20 müsste in diesem Fall eingerichtet sein, mindestens drei Behälter 16 gleichzeitig zu transportieren, wohingegen die Transferstation 24 eingerichtet sein müsste, mindestens vier Behälter 16 gleichzeitig zu puffern. Das LAM 34 des FTF 20 müsste neben den ersten und zweiten Fingerglieder 42 und 44 mindestens ein zusätzliches (mittleres) Fingerglied 46 (vgl. Fig. 2) aufweisen. In diesem speziellen Fall würde ein zusätzliches Fingerglied 46 ausreichen, dass so zwischen dem ersten Fingerglied 42 und dem zweiten Fingerglied 44 anzuordnen ist, dass drei Behälter 16 (mit Abstand zueinander) auf dem LMA 34 transportiert werden können.

Generell gilt, dass zum Austausch von N Behältern 16 die Transferstation 24 mindestens 2N Abstellplätze 30 aufweist. Das LAM 34 kann in diesem Fall eingerichtet ist, mindestens 2N-1 Behälter 16 gleichzeitig zu transportieren, wobei insgesamt auch 2N Fingerglieder 40 vorzusehen wären. Diese Fingerglieder 40 wären wiederum in Abhängigkeit von der Durchfahrtstiefe DT zwischen ihren erhöhten und abgesenkten Stellungen (hin und her) umzuschalten.

Das Umschalten der Fingerglieder 40 erfolgt also in Abhängigkeit von der Durchfahrtstiefe DT, wie oben erläutert. Das Umschalten wird generell durch eine Steuerung 48 bewirkt.

Die Steuerung 48 ist ein Bestandteil des Systems 10, vergleiche Fig. 1. Die Steuerung 48 kann elektronisch und/oder mechanisch implementiert sein.

Wenn die Steuerung 48 mechanisch implementiert ist, können Kulissen (zum Beispiel Führungsschienen) verwendet werden, die am Boden 52 und/oder am Gestell 27 entlang der Transferstation 24 angebracht sind und die mit zum Beispiel Nocken (nicht dargestellt) zusammenwirken, mit denen das FTF 20 versehen ist. Diese Nocken können an die Fingerglieder 40 gekoppelt sein und können durch die Kulissen in Abhängigkeit von der Durchfahrtstiefe DT bewegt werden, wobei eine Bewegung der Nocken in einer entsprechenden Bewegung der Fingerglieder 40 resultiert.

Wenn die Steuerung 48 elektronisch implementiert ist, kann die (aktuelle) Position des FTF 20 mit einem geeigneten Sensor (nicht veranschaulicht) detektiert werden, insbesondere um die Durchfahrtstiefe DT des FTF 20 zu bestimmen. Aus der auf diese Weise bestimmten Durchfahrtstiefe DT kann die Steuerung 48 Signale erzeugen, die die Fingerglieder 40 dazu veranlassen, in die erhöhte Stellung oder in die abgesenkte Stellung bewegt zu werden. Die Fingerglieder 40 können mit Antrieben (nicht dargestellt, z.B. E-Motoren) versehen sein, um sie zwischen den Stellungen hin und her zu bewegen.

Die (elektronische) Steuerung 48 kann (als eigenständige Einheit) innerhalb des FTF 20 vorgesehen werden. Alternativ oder ergänzend kann die (elektronische) Steuerung 48 eine Komponente einer übergeordneten Steuerung (zum Beispiel eines Materialflussrechners) des Systems 10 sein, wobei in diesem Fall das FTF 20 und die übergeordnete Steuerung (verdrahtet und/oder drahtlos) miteinander kommunizieren können.

Die Figuren 4 bis 6 dienen zur Erläuterung des kämmenden Austauschs von Transportgütern 12 zwischen dem FTF 20 und der Transferstation 24. Insbesondere sollen die dazu nötigen Höhenverhältnisse veranschaulicht werden. Figur 4 zeigt eine schematische Seitenansicht eines kämpfenden Austauschs. Figur 5 zeigt eine schematische Rückansicht. Figur 6 zeigt eine Detailansicht der Höhenverhältnisse.

Zur Vereinfachung der Erläuterung ist in der Seitenansicht der Figur 4 eine Transferstation 24 gezeigt, deren Transferförderer 26 aus exemplarisch drei Rollen 50-1 bis 50-3 gebildet ist, die freilaufend (d.h. ohne Antrieb) in einem Gestell 27 gelagert sind, dass am Boden 52 befestigt ist. Die in der Fahrtrichtung 31 erste Rolle 50-1 kann das Gestell 27 in der negativen X-Richtung überragen. Die in der Fahrtrichtung 31 letzte Rolle 50 - 3 kann das Gestell 27 in der positiven X-Richtung überragen. Alle drei Rollen 50 sind in einer Höhe H relativ zum Boden 52 angeordnet, sodass ihre höchsten Punkte HP (vergleiche Figur 6) die planare Abstellfläche 28 auf der Transferstation 24 definieren.

Figur 5 zeigt eine Rückansicht des dritten FTF 20 - 3 der Figur 4, nachdem das FTF 20-3 das Transportgut 12 von der Transferstation 24 aufgenommen hat. Die Oberseite der Stege 36 liegt tiefer als die höchsten Punkte HP der Rollen 50. Dies bedeutet, dass die Transportfläche 38 tiefer als die Abstellfläche 28 liegt. Die in der Figur 5 links gezeigte Rolle 50 repräsentiert eine erste Spur des Transferförderers 26. Die in der Figur 5 rechts gezeigte Rolle 50 repräsentiert eine zweite Spur des Transferförderers 26. Der Transferförderer 26 der Figur 5 ist also zweispurig ausgebildet. Diese zwei Spuren liegen in der Querrichtung Z außerhalb der (in Z-Richtung) äußersten Stege 36, die das LAM 34 bilden.

Fig. 5 verdeutlicht auch, dass die Transportgüter 12 eine gewisse Breite in der Z-Richtung aufweisen müssen, um auf den Spuren des Transferförderers 26 abgesetzt zu werden. Die Anzahl der gleichzeitig auszutauschenden Transportgüter 12 beeinflusst die Länge des LAM 34 und des oder der Abstellplätze 30 in der Längsrichtung X. Somit empfiehlt es sich, Transportgüter 12 zu verwenden, die hinsichtlich einer Grundfläche bzw. eines Bodens gewisse Mindestmaße aufweisen, was wiederum z.B. durch genormte Behälter 16 sichergestellt werden kann. Die Höhe der Transportgüter 12 ist von untergeordneter Bedeutung.

Figur 6 verdeutlicht die Höhenverhältnisse zwischen den Stegen 36, dem Transferförderer 26 und den Fingergliedern 40. Die Oberseite der Stege 36 des LAM 34 definiert die Transportfläche 38. Die in der Querschnittsansicht höchsten Punkte HP der (exemplarischen) Rollen 50 definieren die Abstellfläche 28. Eine Höhe H2 der Unterseiten des oder der Transportgüter 12, wenn diese durch die FTF 20 transportiert werden, entspricht einer Höhe H2 der (planaren) Transportfläche 38.

Drehachsen D der Rollen 50 können in einer (gleichen) Höhe H1 liegen, wobei gilt H2 > H1. Dies wiederum bedeutet, dass eine untere Vorderkante des Transportguts 12 bei der Abgabe an eine obere Hälfte der vordersten Rolle 50-1 anstößt, was durch einen Kontaktpunkt KP in der Figur 6 verdeutlicht ist, während das FTF 20 in die Transferstation 24 einfährt. Die Steigung (Tangente) im Kontaktpunkt KP ist größer als 0°. Die Höhe H2 (und somit die Relativhöhe der Stege 36) ist ferner so zu wählen, dass H1 < H2 < H3 gilt. Die Höhe H3 entspricht der Höhe der Abstellfläche 28.

Die Höhe H4 der Fingerglieder 40 sollte über die Abstellfläche 28 (vertikal) hinausragen, sodass H4 > H3 gilt.

Es versteht sich, dass der Transferförderer 26 nicht aus Rollen 50 gebildet werden muss. Zum Beispiel können anstatt der freidrehend gelagerten Rollen 50 auch Gleitflächenelemente 54 verwendet werden, die in Figur 6 ebenfalls angedeutet sind. Anstatt der ersten Rolle 50 - 1 kann ein erstes (keilförmiges) Gleitflächenelement 54-1 eingesetzt werden, dessen Steigung analog zur Rolle 50-1 gewählt werden kann. Anstatt der weiteren Rollen 50-2 bis 50-3 können ein oder mehrere weitere (beabstandet zueinander angeordnete) Gleitflächenelemente 54-2 benutzt werden, die z.B. einen rechteckigen Querschnitt in der Seitenansicht der Figur 6 (und auch in einer nicht veranschaulichten Draufsicht) aufweisen können und die so gemeinsam die planare Abstellfläche 28 definieren. Die Gleitflächenelemente 54 können eine Oberflächenbeschaffenheit aufweisen, die einen geeigneten Reibungskoeffizienten hat, um die Transportgüter 12 darauf gleitend zu bewegen und sie auch an gewünschten Positionen (ohne unerwünschtes Nachlaufen) anzuhalten.

Die Gleitflächenelemente 54 können auch einteilig hergestellt sein, vorzugsweise aus Blech, wobei das keilförmige Gleitflächenelement 54-1 durch eine Blechabkantung hergestellt sein kann. Weiter bevorzugt können das oder die Gleitflächenelemente 54-2 in der x-Richtung als L-Profil ausgebildet sein. Ein Schenkel kann waagerecht (in der XZ-Ebene) als Gleitfläche für die Transportgüter 12 ausgerichtet sein und ein zweiter Schenkel kann vertikal in der XY-Ebene ausgerichtet sein, um das Gleitflächenelement 54 am Gestell 27 zu befestigen. Der zweite Schenkel kann auch eine horizontale Führung der Transportgüter 12 entlang der Transferstation 24 bewirken.

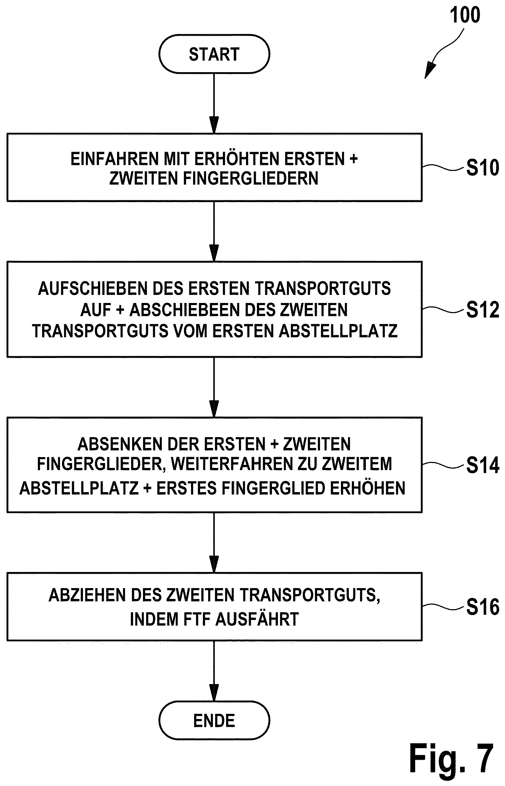

Figur 7 zeigt ein Flussdiagramm eines Verfahrens 100 zum statischen Bereitstellen von zumindest einem der Transportgüter 12. Das Flussdiagramm der Figur 7 beschreibt den in Figur 3 gezeigt Austausch von einem der Transportgüter 12 während einer einzigen Durchfahrt des FTF 20 durch die Transferstation 24.

Das FTF 20 und die Transferstation 24 sind gemäß den Figuren 1 und 2 ausgebildet.

In einem Schritt S10 fährt das FTF 20, das mit dem ersten der Transportgüter 12-1 beladen ist, in die Transferstation 24 ein, wobei sich die ersten und zweiten Fingerglieder 42 und 44 in ihren jeweils erhöhten Stellungen befinden.

Im nächsten Schritt S12 wird das erste Transportgut 12-1 mit dem (erhöhten) ersten Fingerglied 42 auf den ersten Abstellplatz 30-1 aufgeschoben, wo das zweite Transportgut 12-2 steht. Das zweite Transportgut 12-2 wird dabei abgeschoben, während das FTF vollständig einfährt und das erste Transportgut 12-1 den ersten Abstellplatz 30-1 erreicht hat.

Unter Bezugnahme auf die Figuren 8-11 werden nachfolgend verschiedene Abwandlungen des Systems 10 beschrieben werden.

Figur 8 zeigt das FTF 20 der Figuren 3 und 4. Das FTF 20 weist zwei Fingerglieder 40, nämlich das erste Fingerglied 42 und das zweite Fingerglieder 44 auf, die in den in der Längsrichtung X liegenden Endabschnitten des LAM 34 vorgesehen sind. In den Figuren 3 und 4 ist der horizontale Abstand (in der X-Richtung) zwischen den Fingergliedern 42 und 44 exemplarisch so gewählt, dass (genau) ein Transportbehälter 16 dazwischen passt. In der Figur 8 werden anstatt des einen Transportbehälters 16-1 der Figur 3 z.B. zwei kleinere Transportbehälter 16-1 und 16-2 eingesetzt, die zusammen so lang wie der Transportbehälter 16 - 1 der Figur 3 sein können. Diese (kleineren) Transportbehälter 16-1 und 16-2 können gegen zwei (entsprechend dimensionierte) Transportbehälter 16-3 und 16-4 ausgetauscht werden, die auf dem ersten Abstellplatz 30-1 platziert sind. Der Austausch erfolgt gemäß dem Schema, das in Figur 3 bereits veranschaulicht ist. Anstatt eines Behälter 16 werden also zwei Behälter 16 gleichzeitig ausgetauscht, wobei diese jedoch ohne Abstand (in der X-Richtung) dazwischen gehandhabt werden. Figur 9 veranschaulicht ebenfalls einen Austausch von z.B. zwei Behältern 16 mit einem LAM 34, dass exemplarisch vier über die Längsrichtung X verteilt angeordnete Fingerglieder 40 aufweist. Das LAM 34 kann eingerichtet sein, drei Behälter 16 gleichzeitig zu transportieren. Der Transport kann mit einem Abstand zwischen den Behältern 16 erfolgen, der durch die weiteren Fingerglieder 46 zwischen den ersten und zweiten Fingergliedern 42 und 44 gewährleistet werden kann.

Figur 10 veranschaulicht einen Austausch von z.B. einem Behälter 16, obwohl das LAM 34 eingerichtet sein kann, zwei oder mehr Behälter 16 (beabstandet) zu transportieren. Der Behälter 16-1 wird abgegeben, der Behälter 16-2 verbleibt auf dem FTF 20 und der Behälter 16-3 wird vom FTF 20 aufgenommen.

Dies ermöglicht den Austausch von jeweils einem Behälter 16 an zwei unterschiedlichen Stationen 24. Um zum Beispiel, ausgehend von der Situation gemäß der Figur 10D, den Behälter 16-2 bei einer anderen Station 24-2 auszutauschen, kann das FTF 20 der Fig. 10D in diese einfahren, Fig. 10E, und einen Behälter 16-4 auf dem ersten Abstellplatz 30-1 mit dem Behälter 16-2 austauschen, Fig. 10F-H.

Um, ausgehend von der Situation gemäß der Figur 10D, z.B. den Behälter 16-3 bei der anderen Station 24-2 auszutauschen, kann das FTF 20 auch rückwärts in die Station 24-2 einzufahren, so dass das erste Fingerglied 42 vorn und das zweite Fingerglied 44 hinten positioniert ist (nicht veranschaulicht in Fig. 10).

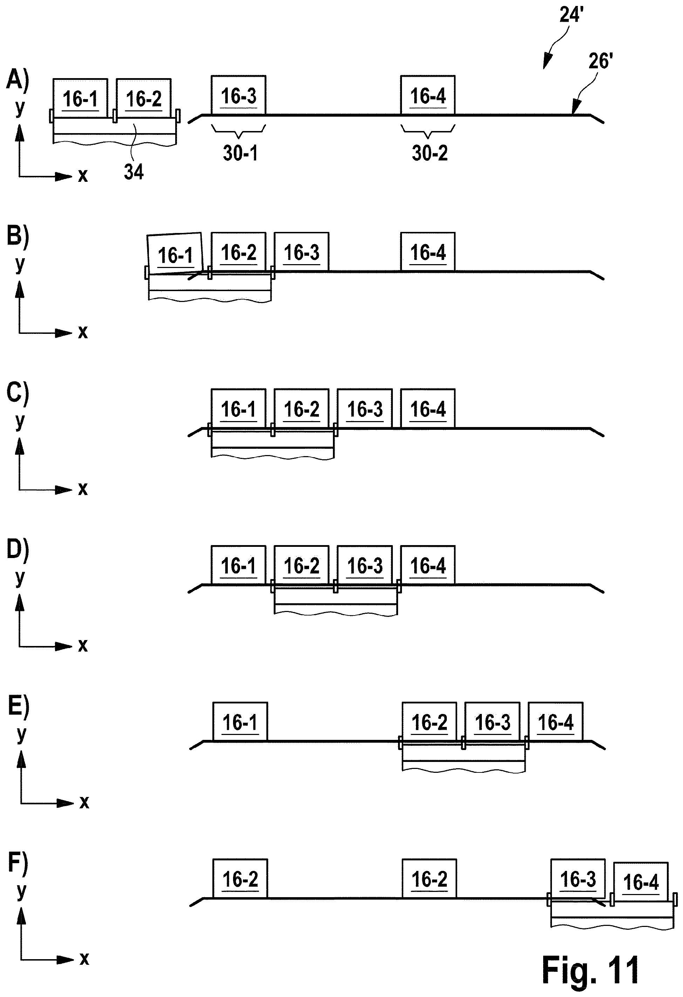

Figur 11 veranschaulicht einen Austausch von zwei Behältern 16 an der (gleichen) Station 24', wobei insbesondere das LAM 34 der Figur 10 eingesetzt wird. Die Station 24' der Figur 11 unterscheidet sich von der Station 24 der Figur 10 darin, dass die ersten und zweiten Abstellplätze 30-1 und 30-2 in der Längsrichtung X weiter zueinander beanstandet sind. Für den Abstand d zwischen dem ersten Abstellplatz 30-1 und dem zweiten Abstellplatz 30-2 gilt d > 2L_{BEHÄLTER}, wobei L_{BEHÄLTER} eine (Einheits-)Länge des Behälter 16 in der Längsrichtung X angibt. Die Länge der Station 24' ist entsprechend länger. Im Beispiel der Figur 11 kann der Transferförderer 26 der Station 24' zur gleichzeitigen Aufnahme von zum Beispiel sechs Behältern 16 eingerichtet sein.

Die Figuren 8-11 verdeutlichen also eine Vielzahl von Möglichkeiten zur Abänderung des Systems 10.

### BEZUGSZEICHENLISTE

- 10: (Intralogik-) System
- 12: Transportgut
- 14: Arbeitsplatz
- 16: Behälter
- 18: Karton
- 20: FTF (fahrerloses Transportfahrzeug)
- 22: FTS (fahrerloses Transportsystem)
- 24: Transferstation
- 26: Transferförderer
- 27: Gestell
- 28: Abstellfläche
- 30: Abstellplatz
- 31: Fahrtrichtung von 20
- 32: Gehäuse von 20
- 34: LAM (Lastaufnahmemittel) von 20
- 36: Stege/Lamellen von 34
- 38: Transportfläche
- 40: Fingerglieder
- 42: 1. Fingerglied, hinteres
- 44: 2. Fingerglied, vorderes
- 46: zusätzliche(s) Fingerglied(er)
- 48: Steuerung
- 50: Rollen
- 52: Boden
- 54: Gleitflächenelement

## Patentansprüche

1. Intralogistik-System (10) zur statischen Bereitstellung von Transportgütern (12) mit:
einem fahrerlosen Transportfahrzeug, FTF, (20);
einer Transferstation (24) zur statischen Bereitstellung von mindestens einem der Transportgüter (12) auf einer Abstellfläche (28) der Transferstation (24); und
einer Steuerung (48);
wobei das FTF (20) ein Lastaufnahmemittel, LAM, (34) aufweist, das eine Transportfläche (38), auf der das zumindest eine der Transportgüter (12) während einer Transportfahrt ruht, auf einer Oberseite des FTF (20) definiert, **dadurch gekennzeichnet, dass** das LAM (34) entlang einer Fahrtrichtung (31) des FTF (20) ein erstes Fingerglied (42) und ein zweites Fingerglied (44) aufweist, von denen jedes zwischen einer erhöhten Stellung und einer abgesenkten Stellung umschaltbar ist;
wobei die Transferstation (24) eingerichtet ist, hintereinander mindestens zwei der Transportgüter (12) auf einer entsprechenden Vielzahl von Abstellplätzen (30) auf der Abstellfläche (28) zu puffern;
wobei die Transferstation (24) einen mehrspurigen Transferförderer (26) aufweist, der die Abstellfläche (28) definiert;
wobei der Transferförderer (26) und das LAM (34) eingerichtet sind, jedes der bereitzustellenden Transportgüter (12) kämmend miteinander auszutauschen, indem das FTF (20) durch die Transferstation (24) hindurchfährt; und
wobei die Steuerung (48) eingerichtet ist, während einer Durchfahrt des FTF (20) durch die Transferstation (24) jedes der Fingerglieder (42, 44) in Abhängigkeit von einer Durchfahrtstiefe (DT) zwischen den Stellungen umzuschalten.

2. Intralogistik-System (10) nach Anspruch 1, wobei jedes der Fingerglieder (42, 44) in der jeweiligen erhöhten Stellung über die Abstellfläche (28) und die Transportfläche (38) hinausragt und in der jeweiligen abgesenkten Stellung unterhalb der Abstellfläche (38) positioniert ist, und wobei der Transferförderer (26), der die Abstellfläche (28) definiert, vorzugsweise nicht angetrieben ist.

3. Intralogistik-System (10) nach Anspruch 1 oder 2, wobei die Abstellplätze (30) in der Fahrtrichtung des FTF (20) zueinander beabstandet sind.

4. Intralogistik-System (10) nach einem der Ansprüche 1 bis 3, wobei das FTF (20) richtungswechselfrei durch die gesamte Transferstation (20) fährt, um insbesondere ein erstes der Transportgüter (12) an die Transferstation (20) abzugeben und um während der gleichen Durchfahrt ein zweites der Transportgüter (12) von der Transferstation (24) aufzunehmen.

5. Intralogistik-System (10) nach einem der Ansprüche 1 bis 4, wobei jedes der Transportgüter (12) hinsichtlich seiner Breite, und insbesondere auch hinsichtlich seiner Länge, genormt ist.

6. Intralogistik-System (10) nach einem der Ansprüche 1 bis 5, wobei zumindest das erste Fingerglied (42) bei einer Einfahrt in die Transferstation (20) in der erhöhten Stellung ist, während der Durchfahrt in Abhängigkeit von einer ersten Durchfahrtstiefe (DT1) in die abgesenkte Stellung und dann in Abhängigkeit von einer zweiten Durchfahrtstiefe (DT2) wieder in die erhöhte Stellung geschaltet wird, wobei die erste Durchfahrtstiefe (DT1) kleiner als die zweite Durchfahrtstiefe (DT2) ist.

7. Intralogistik-System (10) nach einem der Ansprüche 1 bis 6, wobei
die Abstellfläche (28) durch höchstgelegene Punkte des mehrspurigen Transferförderers (26) definiert ist, und
die Abstellfläche (28) höher als die Transportfläche (38) angeordnet ist.

8. Intralogistik-System (10) nach einem der Ansprüche 1 bis 7, das einen Sensor zur Bestimmung einer aktuellen Position des FTF (20), insbesondere während der Durchfahrt durch die Transferstation (24) aufweist, wobei
die Steuerung (48) elektronisch ist;
die Steuerung (48) mit dem Sensor kommuniziert;
die Steuerung eingerichtet ist; eine Durchfahrtstiefe (DT) des FTF (20) zu bestimmen; und
die Steuerung (48) eingerichtet ist, basierend auf der Durchfahrtstiefe Signale zu erzeugen, die die Fingerglieder (42, 44) veranlassen, in ihre erhöhte Stellung und in ihre abgesenkte Stellung bewegt zu werden.

9. Verfahren zur statischen Bereitstellung von Transportgütern (12) in einem Intralogistiksystem (10), das aufweist: ein fahrerloses Transportfahrzeug, FTF, (20) mit einem Lastaufnahmemittel, LAM, (34), das erste und zweite Fingerglieder (42, 44) aufweist, die jeweils zwischen einer erhöhten Stellung und einer abgesenkten Stellung umschaltbar sind; eine Transferstation (24) mit einem Transferförderer (26) zur statischen Bereitstellung von mindestens einem der Transportgüter (12) auf einer Abstellfläche (28) der Transferstation (24), die erste und zweite Abstellplätze (30-1, 30-2) umfasst, wobei der Transferförderer (26) und das LAM (34) eingerichtet sind, jedes der bereitzustellenden Transportgüter (12) kämmend miteinander auszutauschen, indem das FTF (20) durch die Transferstation (24) hindurchfährt; und eine Steuerung (48); wobei das Verfahren die folgenden Schritte aufweist:
Einfahren (S10) in die Transferstation (24) mit dem FTF (20), das mit einem ersten der Transportgüter (12) beladen ist, wobei sich die ersten und zweiten Fingerglieder (42, 44) in ihren erhöhten Stellungen befinden;
während das FTF (20) einfährt (S12), Aufschieben des ersten Transportguts (12) mit dem ersten Fingerglied (42) auf den ersten Abstellplatz (30-1) und Abschieben eines zweiten der Transportgüter (12), das bereits auf dem ersten Abstellplatz (30-1) lokalisiert ist, der durch den Transferförderer (26) definiert ist, mit dem zweiten Finderglied (44) auf den zweiten Abstellplatz (30-2);
sobald das erste Transportgut (12) auf den ersten Abstellplatz (30-1) aufgeschoben ist, Bewegen der ersten und zweiten Fingerglieder (42, 44) in ihre abgesenkten Stellungen, Weiterfahren mit dem FTF (20) mit abgesenkten ersten und zweiten Fingergliedern (42, 44), bis das erste Fingerglied (42) in seine erhöhte Stellung bewegbar ist, ohne das erste Transportgut (12) auf dem ersten Abstellplatz (30-1) umzupositionieren (S14), und dann Bewegen des ersten Fingerglieds (42) in seine erhöhte Stellung (S14); und
Abziehen des zweiten Transportguts (12) vom zweiten Abstellplatz (30-2) mit dem ersten Fingerglied (42), während das FTF (20), dessen erstes Fingerglied (42) wieder in der erhöhten Stellung ist, aus der Transferstation (24) ausfährt.

## Claims

1. An intralogistics system (10) for static provision of transport items (12) comprising:
a driverless transport vehicle, DTV, (20);
a transfer station (24) for static provision of at least one of the transport items (12) on a deposition surface (28) of the transfer station (24); and
a control (48);
wherein the DTV (20) comprises a load-handling device, LHD, (34) defining a transport surface (38) on an upper side of the DTV (20) on which the at least one of the transport items (12) rests during transport travel, **characterized in that** the LHD (34) comprises, along a travelling direction (31) of the DTV (20), a first finger member (42) and a second finger member (44), each of which is switchable between a raised position and a lowered position;
wherein the transfer station (24) is configured to buffer, one behind the other, at least two of the transport items (12) on a corresponding plurality of deposition locations (30) on the deposition surface (28);
wherein the transfer station (24) comprises a multi-track transfer conveyor (26) defining the deposition surface (28);
wherein the transfer conveyor (26) and the LHD (34) are configured to exchange with each other each of the to-be-provided transport items (12) meshingly by the DTV (20) travelling through the transfer station (24); and
wherein the control (48) is configured to switch each of the finger members (42, 44), depending on a travelling depth (DT), between the positions while the DTV (20) travels through the transfer station (24).

2. The intralogistics system (10) of claim 1, wherein each of the finger members (42, 44), in the respective raised position, projects beyond the deposition surface (28) and the transport surface (38), and in the respective lowered position is positioned below the deposition surface (38), and wherein preferably the transfer conveyor (26), which defines the deposition surface (28), is non-driven.

3. The intralogistics system (10) of claim 1 or 2, wherein the deposition locations (30) are spaced apart from one another in the travelling direction of the DTV (20).

4. The intralogistics system (10) of any one of claims 1 to 3, wherein the DTV (20) travels through the entire transfer station (20) without change of travelling direction, particularly in order to deliver a first one of the transport items (12) to the transfer station (20) and to receive a second one of the transport items (12) from the transfer station (24) during the same passage.

5. The intralogistics system (10) of any one of claims 1 to 4, wherein each of the transport items (12) is standardized with respect to its width and, in particular, also with respect to its length.

6. The intralogistics system (10) of any one of claims 1 to 5, wherein at least the first finger member (42) is in the raised position upon travelling into the transfer station (24), is switched into the lowered position during the passage depending on a first travelling depth (DT1), and is then switched back into the raised position depending on a second travelling depth (DT2), wherein the first travelling depth (DT1) is smaller than the second travelling depth (DT2).

7. The intralogistics system (10) of any one of claims 1 to 6, wherein
the deposition surface (28) is defined by uppermost points of the multi-track transfer conveyor (26), and
the deposition surface (28) is arranged higher than the transport surface (38).

8. The intralogistics system (10) of any one of claims 1 to 7, comprising a sensor for determining a current position of the DTV (20), in particular while the DTV (20) travels through the transfer station (24), wherein
the control (48) is electronic;
the control (48) communicates with the sensor;
the control is configured to determine a travelling depth (DT) of the DTV (20); and
the control (48) is configured to generate signals, based on the travelling depth DT, causing the finger members (42, 44) to be moved into their raised position and into their lowered position.

9. A method for static provision of transport items (12) in an intralogistics system (10) which comprises: a driverless transport vehicle, DTV, (20) including a load-handling device, LHD, (34), which comprises first and second finger members (42, 44) respectively switchable between a raised position and a lowered position; a transfer station (24) including a transfer conveyor (26) for static provision of at least one of the transport items (12) on a deposition surface (28) of the transfer station (24), which includes first and second deposition locations (30-1, 30-2), wherein the transfer conveyor (26) and the LHD (34) are configured to meshingly exchange with each other the to-be-provided transport items (12) by the DTV (20) travelling through the transfer station (24); and a control (48); wherein the method comprises the following steps:
the DTV (20) travelling (S10) into the transfer station (24), the DTV (20) loaded with a first one of the transport items (12), wherein the first and second finger members (42, 44) are in their raised positions;
while the DTV (20) travels in (S12), pushing the first transport item (12) with the first finger member (42) onto the first deposition location (30-1) and pulling a second one of the transport items (12) located already on the first deposition location (30-1), which is defined by the transfer conveyor (26), with the second finger member (44) onto the second deposition location (30-2);
once the first transport item (12) is pushed on the first deposition location (30-1), moving the first and second finger members (42, 44) in their lowered positions, the DTV (20) continuing to travel with lowered first and second finger members (42, 44) until the first finger member (42) is movable into its raised position without repositioning the first transport item (12) on the first deposition location (30-1), and then moving the first finger member (42) into its raised position (S14); and
pushing off the second transport item (12) from the second deposition location (30-2) with the first finger member (42) while the DTV (20), the first finger member (42) of which is again in the raised position, travels out of the transfer station (24).

## Revendications

1. Système intralogistique (10) pour la mise à disposition statique d'articles à transporter (12) comportant :
un véhicule de transport sans conducteur, FTF (20) ;
un poste de transfert (24) pour la mise à disposition statique d'au moins l'un des articles à transporter (12) sur une surface de dépôt (28) du poste de transfert (24) ; et
un dispositif de commande (48) ;
dans lequel le FTF (20) présente un moyen de réception de charge, LAM (34), qui définit sur une face supérieure du FTF (20) une surface de transport (38) sur laquelle repose l'au moins un des articles à transporter (12) pendant un trajet de transport, **caractérisé en ce que** le LAM (34) présente, le long d'une direction de déplacement (31) du FTF (20), un premier élément formant doigt (42) et un second élément formant doigt (44), dont chacun peut être commuté entre une position relevée et une position abaissée ;
dans lequel le poste de transfert (24) est conçu pour stocker successivement au moins deux des articles à transporter (12) sur une pluralité correspondante d'emplacements de dépôt (30) sur la surface de dépôt (28) ;
dans lequel le poste de transfert (24) présente un convoyeur de transfert (26) à plusieurs voies qui définit la surface de dépôt (28) ;
dans lequel le convoyeur de transfert (26) et le LAM (34) sont conçus pour échanger chacun des articles à transporter (12) à mettre à disposition en s'emboîtant l'un dans l'autre en faisant passer le FTF (20) à travers le poste de transfert (24) ; et
dans lequel le dispositif de commande (48) est configuré pour commuter chacun des éléments formant doigts (42, 44) entre les positions pendant un passage du FTF (20) à travers le poste de transfert (24) en fonction d'une profondeur de passage (DT).

2. Système intralogistique (10) selon la revendication 1, dans lequel chacun des éléments formant doigts (42, 44) fait saillie au-delà de la surface de dépôt (28) et de la surface de transport (38) dans la position relevée respective et est positionné en dessous de la surface de dépôt (38) dans la position abaissée respective, et dans lequel le convoyeur de transfert (26) qui définit la surface de dépôt (28) est de préférence non entraîné.

3. Système intralogistique (10) selon la revendication 1 ou 2, dans lequel les emplacements de dépôt (30) sont espacés les uns des autres dans la direction de déplacement du FTF (20).

4. Système intralogistique (10) selon l'une des revendications 1 à 3, dans lequel le FTF (20) traverse l'ensemble du poste de transfert (20) sans changement de direction, en particulier pour délivrer un premier des articles à transporter (12) au poste de transfert (20) et pour prendre un second des articles à transporter (12) du poste de transfert (24) pendant le même passage.

5. Système intralogistique (10) selon l'une des revendications 1 à 4, dans lequel chacun des articles à transporter (12) est normalisé en termes de largeur, et en particulier également en termes de longueur.

6. Système intralogistique (10) selon l'une des revendications 1 à 5, dans lequel au moins le premier élément formant doigt (42) est dans la position relevée lors d'une entrée dans le poste de transfert (20), est commuté vers la position abaissée pendant le passage en fonction d'une première profondeur de passage (DT1), puis est à nouveau commuté vers la position relevée en fonction d'une seconde profondeur de passage (DT2), dans lequel la première profondeur de passage (DT1) est inférieure à la seconde profondeur de passage (DT2).

7. Système intralogistique (10) selon l'une des revendications 1 à 6, dans lequel
la surface de dépôt (28) est définie par des points situés le plus haut du convoyeur de transfert (26) à plusieurs voies, et
la surface de dépôt (28) est disposée plus haut que la surface de transport (38).

8. Système intralogistique (10) selon l'une des revendications 1 à 7, lequel présente un capteur pour la détermination d'une position actuelle du FTF (20), en particulier pendant le passage à travers le poste de transfert (24), dans lequel
le dispositif de commande (48) est électronique ;
le dispositif de commande (48) communique avec le capteur ;
le dispositif de commande est configuré pour déterminer une profondeur de passage (DT) du FTF (20) ; et
le dispositif de commande (48) est configuré pour générer, sur la base de la profondeur de passage, des signaux qui amènent les éléments formant doigts (42, 44) à être déplacés vers leur position relevée et vers leur position abaissée.

9. Procédé pour la mise à disposition statique d'articles à transporter (12) dans un système intralogistique (10), qui présente : un véhicule de transport sans conducteur, FTF (20), comportant un moyen de réception de charge, LAM (34), qui présente des premier et second éléments formant doigts (42, 44) qui peuvent être commutés respectivement entre une position relevée et une position abaissée ; un poste de transfert (24) comportant un convoyeur de transfert (26) pour la mise à disposition statique d'au moins l'un des articles à transporter (12) sur une surface de dépôt (28) du poste de transfert (24) qui comprend des premier et second emplacements de dépôt (30-1, 30-2), dans lequel le convoyeur de transfert (26) et le LAM (34) sont conçus pour échanger chacun des articles à transporter (12) à mettre à disposition en s'emboîtant l'un dans l'autre en faisant passer le FTF (20) à travers le poste de transfert (24) ; et un dispositif de commande (48) ; dans lequel le procédé présente les étapes suivantes :
entrée (S10) dans le poste de transfert (24) avec le FTF (20) chargé d'un premier des articles à transporter (12), dans lequel les premier et second éléments formant doigts (42, 44) sont dans leurs positions relevées ;
pendant que le FTF (20) entre (S12), poussée du premier article à transporter (12) avec le premier élément formant doigt (42) sur le premier emplacement de dépôt (30-1) et poussée d'un second des articles à transporter (12), qui est déjà situé sur le premier emplacement de dépôt (30-1) défini par le convoyeur de transfert (26), avec le second élément formant doigt (44) sur le second emplacement de dépôt (30-2) ;
dès que le premier article à transporter (12) est poussé sur le premier emplacement de dépôt (30-1), déplacement des premier et second éléments formant doigts (42, 44) dans leurs positions abaissées, poursuite du déplacement avec le FTF (20) avec les premier et second éléments formant doigts (42, 44) abaissés jusqu'à ce que le premier élément formant doigt (42) puisse être déplacé dans sa position relevée sans repositionner le premier article à transporter (12) sur le premier emplacement de dépôt (30-1) (S14), puis déplacement du premier élément formant doigt (42) dans sa position relevée (S14) ; et
retrait du second article à transporter (12) du second emplacement de dépôt (30-2) avec le premier élément formant doigt (42), pendant que le FTF (20), dont le premier élément formant doigt (42) est à nouveau dans la position relevée, sort du poste de transfert (24).
